# EUROPEAN PATENT APPLICATION

(11) **EP 2 779 668 A2**
(43) Date of publication of application: **17.09.2014**
(21) Application number: 14158742.8
(22) Date of filing: 11.03.2014
(51) Int. Cl.: H04N 21/41, H04N 21/4363, H04N 21/485

(54) **Configuration method of a multimedia system**

(30) Priority: 11.03.2013 US 201361775737 P
(71) Applicant: Nagravision S.A., 1033 Cheseaux-sur-Lausanne (CH)
(72) Inventor: Thomas, Frédéric, 1213 Onex (CH)
(74) Representative: Leman Consulting S.A.

(57) **Abstract**

In a home environment, different devices are connected together such as a television, a decoder, a DVD and/or HD reader/writer, a media player or a home network. It could be quickly difficult to configure these various devices when a specific function is required. The main idea of the invention is to store configuration data on a NFC portable device. Each device comprises configuration data defining the input and output setting of a device as well as internal setting. The configuration message comprises the configuration data and the device identifier. The collection of the configuration messages of a system is named set of configuration data. The set of configuration data refers to a set of connected devices, and the configuration messages can be transmitted to a first device to configure said device, the latter transferring the configuration messages to the other devices for subsequent configuration of these devices.

## Description

### Introduction

Technology Near Field Communication, known as the name NFC is a wireless communication technology, high frequency, with a range of the order of a few centimeters, for the exchange of information between multiple devices. This technology is derived from a combination in a single device, a smart card interface and a contactless reader.

An NFC device is able to communicate with other NFC devices as well as devices in accordance with ISO 14443 (contactless smart cards) standard.

The standards cover the NFC communication protocols and data exchange formats and are based on existing standards for radio frequency identification (RFID) as ISO / IEC 14443, FeliCa and ISO / IEC 18092. They include standards defined by the "NFC Forum" which was founded in 2004 by Nokia, Philips and Sony and now includes more than 180 members.

NFC is an extension of RFID technology, allowing two-way communication between two devices while previous systems such as contactless smart cards allow only one-way communication.

NFC technology is usable only over a short distance of a few centimeters, which implies a voluntary user and prevents use without his knowledge.

NFC devices can be active or passive. A passive device, such as a tag, a smart card or a simple chip affixed to an object contains information only readable by other NFC-enabled devices. The passive device is powered by the electromagnetic field generated by the reader (active device) and therefore does not need its own power supply.

An active device instead is one that generates the electromagnetic field. He can do that to interact with a passive device (see above) or to establish a communication channel between two active devices.

The fact that a device has a power like a smartphone does not necessarily mean it will work in active mode only. A smartphone can handle the NFC interface in active or passive mode. In passive mode, it is called emulation card. In this mode the smartphone (or any other portable device such as tablets) will be stored in a secure memory information normally stored in the card. Thus, when the smartphone detects the electromagnetic field, it can access the secure memory and NFC meet in passive mode with the information read from the secure memory.

Among the many known applications using NFC technology, the following examples might be mentioned:
- payment using a credit card or contactless (mobile phone, smartphone, laptop, tablet computer ... ) mobile device on a contactless payment terminal;
- payment of parking terminal accepting contactless payment using NFC mobile terminal;
- purchase and validation of a contactless ticket or a ticket to a show with her mobile;
- management of coupons in a store, manage loyalty points at retailers (couponing);
- access and starting a vehicle using his mobile phone ;
- Read product information (price, composition , allergy, etc..) in a store ;
- Control access to local OA (meeting room, business , classroom, etc.);
- exchange profiles between two users of a social network or game levels by bringing the two phones (user peer- to-peer) ;
- reading an electronic business card with a PDA;
- sync Internet bookmarks and contacts between a PDA and a mobile phone ;
- recovery key to a WiFi access point approaching its " NFC device" terminal dissemination ;
- access to home automation features of a building.

### Background Art

In a home environment, different devices are connected together such as a television, a decoder, a DVD and/or HD reader/writer, a media player or a home network. It could be quickly difficult to configure these various devices when a specific function is required. Many operations are necessary to select a specific source, switch the appropriate devices, select the appropriate setting to finally enjoy the program desired by the consumer.

### Brief description of the invention

The main idea of the invention is to store configuration data on a NFC portable device. Each device comprises configuration data defining the input and output setting of a device as well as internal setting. The configuration message comprises the configuration data and the device identifier. The collection of the configuration messages of a system is named set of configuration data. The set of configuration data refers to a set of connected devices, and the configuration messages can be transmitted to a first device to configure said device, the latter transferring the configuration messages to the other devices for subsequent configuration of these devices.

According to a first embodiment, the first device comprises a built-in NFC reader able to read the set of the configuration data stored in the NFC portable device. The first device is connected with the other devices thanks to various communication means such as Wifi, HDMI, Ethernet, Bluetooth. The configuration data are passed to the other devices to complete the configuration of the system.

The present invention works in two major steps, the setting up and the exploitation of the configuration data. The setting up phase is the gathering of the configuration of each device and the transmission of the configuration data to the portal device, i.e. the one in connection with the NFC card. The exploitation phase is when a user is willing to configure the system and use one of the NFC data carrier to pass the configuration data to the system.

### Brief description of the figure

The present invention will be better understood thanks to the attached figure in which a system comprising a plurality of devices are connected together and configured thanks to a NFC data carrier.

### Detailed description

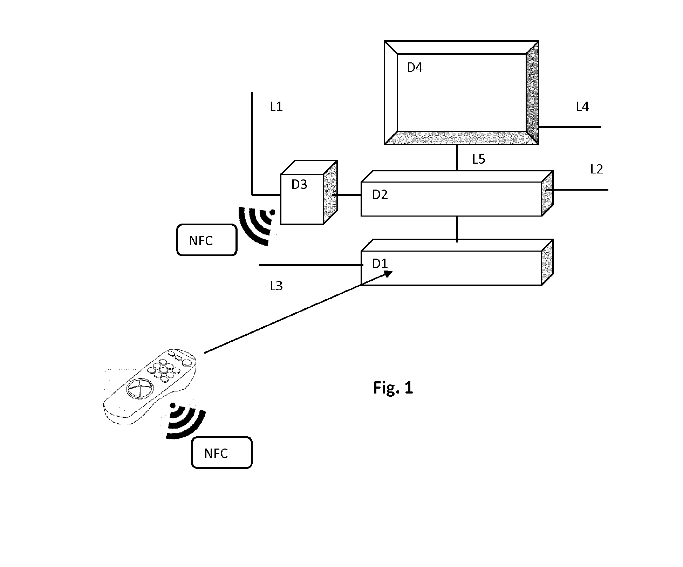

The figure 1 illustrates a multi-media system comprising different devices connected together to propose a variety of entertainment experience. The system can allow a plurality of particular entertainment experience such as watching broadcast channels, watching recorded movies (on DVD or local hard Disk), watching video content stored in a remote storage, playing a video game, listening to music, etc, as well as a combination of these possibilities, for example when a media content should be recorded while another content is played back.

### Setting up phase

The first phase is the setting up phase in which the system is placed in a particular function, for example watching a broadcast channel and using the 5:1 audio system to enjoy a better sound. Each device can have several inputs and several outputs. The television D4 communicates its setting (selection of the input L4 or L5 or the output) as a configuration message to the set-top box D2. This device D2 is connected to an audio/video signal L2 which could be the cable network, the connection to a satellite receiver or a terrestrial antenna. The connection between the device D2 and D4 is preferably an HDMI connection. This connection allows the transfer of configuration data thanks to a CEC (Consumer Electronics Control) connection or an Ethernet data connection. In our case, the device D2 does not contain a NFC reader and these configuration messages should further be transferred to the device D3 which is for example a network media server. The device D3 is connected with Internet (L1) and can access on-line media contents. The connection between the device D3 and D2 is preferably HDMI with the same possibility to transfer configuration data. In case that the version of HDMI is not compliant with the dialog necessary for transferring the configuration messages, the device D3 and D2 can communicate via a Bluetooth channel. The media content will be transferred through the HDMI while the configuration data can use a different route, for example the Bluetooth channel.

In the example above, the state of the device D1 is not really important since it will not play a role in the expected function. However, in other example, the device D1 should be configured as well. This device D1 can be a DVD/HD recorder and communicate with the device D2 via HDMI or Ethernet.

Once each of the configuration data from each device is collected and sent to the media player D3, the set of configuration data are transferred and stored in an NFC device.

In this configuration phase, the device D3 can execute a function called device discovery. The device D3 senses each of its connection to check if another device is connected. In the positive event, the device D3 tries to communicate via the discovered channel(s) (e.g. HDMI, Bluetooth, Ethernet or Wifi) and collect the configuration message of each adjacent device. The device D3 asks to replicate the same function to the adjacent device so that the configuration data of a device such as the screen D4, not directly connected with the device D3, can pass its configuration data to the device D2 and then to the device D3. An adjacent device is a device with which a direct connection can be established. It is to be noted that each device has an identifier which is added as header to the configuration data. When the device D2 receives the configuration data from the screen D4, the message comprise an identifier and the configuration data of the identified device, such as:
ID_D4, CONF_D4 : the identifier of D4 precedes the configuration data of D4.

This message is then transferred to the device D3 and the device D2 adds its header :
ID_D2; ID_D4; CONF_D4

The fist header being the first device to which the message will be sent during the exploitation phase. The second header being the next device to which the message will be sent, and so on.

Preferably, each device generates and stores a list of identifiers of adjacent devices by collecting the identifiers of the adjacent devices. This list can be used to route the messages during the exploitation phase.

According to another embodiment, the message generated by a device is not modified and is forwarded to the adjacent device without adding the identifier of said device.

These messages, comprising configuration data and identifier(s) are stored in a NFC data carrier thanks to the reader located in the device D3. The NFC data carrier can be a smartcard, a dongle or any type of passive NFC device. It could be also a smartphone, a tablet in which the configuration data are stored.

One configuration of the system is linked with one NFC data carrier in case the NFC data carrier is a passive device. In case of an active device such as a smartphone, it is possible to store a plurality of configuration set, each being the specific configuration of each device in the system. Each time that a specific configuration should be acquired and stored, the user initiates a command preferably with the device hosting the NFC reader and this device collects the configuration data of each device of the system and stores them into the NFC data carrier.

### Exploitation phase

The NFC data carrier is presented to one of the device which is part of the system and comprising an NFC reader. It could be the same device D3 which was used during the setting up phase of another device.

As illustrated in the figure 1, the remote control comprises a NFC reader. This allows the user to simply activate the NFC function on the remote control (in order to save the battery life to the remote control) and to read on NFC data carrier. Once in the remote control, the set of configuration data are sent to the device with which it is normally connected, in our example with the device D1.

The device D1, when the data are received, checks if some configuration data are intended to itself. In the positive event, these configuration data are used to configure the device D1. The other configuration data are then forwarded to other devices. In the example of the figure 1, the configuration data received by the device D1 are then transferred to the device D2. This device extracts the configuration data intended for this device and pass the other one to the adjacent devices.

The list of adjacent devices can be used to route each message to its destination. In case that the identifier of a message is not present in the list, the device D1 sends the message of an non adjacent device to all devices connected to it. In the reception of this message, the device D2 checks its identifier list and finds out that it is connected to the device D4. The device D2 can then forward the message to the device D4.

## Claims

1. Configuration method of a multimedia system comprising a first device and at least one adjacent device having means to communicate with the first device, said first device comprising means to read/write an NFC data carrier, said method comprising a setting up phase and an exploitation phase, the setting up phase comprising :
- collecting by each device configuration data, and composing by each device a configuration message comprising the configuration data and a device identifier,
- transferring the configuration message of the adjacent device to the first device,
- forming by the first device a set of configuration messages comprising the configuration message of each device of the system,
- transferring, thanks to a read/write NFC data carrier, the set of configuration messages to an NFC data carrier,
- storing the set of configuration messages in the NFC data carrier,
the exploitation phase comprising :
- reading by a second device, which is either the first device or one of the adjacent devices, the set of configuration messages stored in the NFC data carrier,
- extracting the configuration data of said second device from the set of configuration messages,
- transferring the configuration message of the adjacent device,
- loading the configuration data in each of the device to obtain a particular entertainment experience.

2. The method of claim 1, wherein the second device is the first device, the means to read/write an NFC data carrier serving to the storage and the retrieval of the configuration messages into the NFC data carrier.

3. The method of claim 1, wherein the second device is one of the adjacent device having means to read the NFC data carrier.

4. The method of claim 3, wherein the second device receives data from a remote control, said remote control comprising an NFC reader to read the NFC data carrier and to transmit the set of configuration to the second device.

5. The method of any of the claims 1 to 4, wherein a first adjacent device is connected to a second adjacent device, said second adjacent device not being connected with the first device, the configuration messages received by the first adjacent device being at least partly passed to the second adjacent device.

6. The method of any of the claims 1 to 5, wherein each device comprises a device identifier and comprises the steps of:
- sending a request to an adjacent device,
- receiving a response containing the device identifier of the adjacent device,
- building and storing a list of adjacent devices.

7. Method of claim 6, wherein the second device, based on the device identification contained in the set of configuration messages and the list of adjacent devices, routes the configuration messages to the appropriate device.

8. Method of any of the claims 1 to 7, wherein the communication between the first device and an adjacent device is of HDMI type.

9. A multimedia system comprising:
a first device; and
at least one adjacent device adapted to communicate with the first device, said first device adapted to read from and write to a near field communication (NFC) data carrier, said system being adapted to:
collect by each device configuration data, and compose by each device a configuration message comprising the configuration data and a device identifier;
transfer the configuration message of the adjacent device to the first device;
form by the first device a set of configuration messages comprising the configuration message of each device of the system;
transfer the set of configuration messages to an NFC data carrier;
store the set of configuration messages in the NFC data carrier;
read by a second device, which is either the first device or one of the adjacent devices, the set of configuration messages stored in the NFC data carrier;
extract the configuration data of the second device from the set of configuration messages;
transfer the configuration message of the adjacent device; and
load the configuration data in each of the device to obtain a particular entertainment function.

10. The system of claim 9, wherein the second device is the first device.

11. The system of claim 9, wherein the second device is one of the adjacent devices adapted to read the NFC data carrier.

12. The system of claim 11, wherein the second device receives data from a remote control, said remote control comprising an NFC reader to read the NFC data carrier and to transmit the set of configuration data to the second device.

13. The system of any of the claims 9 to 12, wherein a first adjacent device is connected to a second adjacent device, the second adjacent device not being connected with the first device, and wherein the configuration messages received by the first adjacent device is at least partly passed to the second adjacent device.

14. The system of any of the claims 9 to 13, wherein each device comprises a device identifier and is adapted to:
send a request to an adjacent device;
receive a response containing the device identifier of the adjacent device; and
build and store a list of adjacent devices.

15. The system of claim 14, wherein the second device, based on the device identification contained in the set of configuration messages and the list of adjacent devices, routes the configuration messages to the appropriate device.
